# EUROPEAN PATENT SPECIFICATION

(11) **EP 2 082 840 B1**
(45) Date of publication and mention of the grant of the patent: **01.05.2013**
(21) Application number: 09151053.7
(22) Date of filing: 22.01.2009
(51) Int. Cl.: B25B 21/00, B25B 23/00

(54) **Safety torque intensifying tool**
Werkzeug mit Sicherheitsdrehmomentverstärkung
Outil de sécurité avec amplification du couple

(30) Priority: 24.01.2008 US 23151 P; 14.05.2008 US 120346
(43) Date of publication of application: 29.07.2009
(73) Proprietor: Junkers, John K., Saddle River, NJ 07458 (US)
(72) Inventor: Junkers, John K., Saddle River, NJ 07458 (US)
(74) Representative: Börlin, Maria

(56) References cited:
- GB-A- 2 410 205
- GB-A- 2 437 656
- US-A- 4 155 278
- US-A1- 2002 098 938

## Description

### BACKGROUND OF THE INVENTION

The present invention relates to torque intensifying tools.

Torque intensifying tools may have several different applications in several different fields. One typical field of application relates to industrial torque wrenches for the fastening and loosening of nuts and bolts.

When torque intensifying tool is used in connection with the fastening or loosening of industrial nuts or bolts, the torque intensifying tool typically will have at least two modes of operation. In a first mode of operation the torque intensifying tool will operate with a high speed and a low torque. This is normally accomplished by deactivating some of the multiple gear cages within the tool. A second mode of operation will take place when the torque intensifying tool operates with a low speed but a high torque. This is normally accomplished when all gear cages are rendered operational.

In bolting applications, the high speed/low torque mode is used, for example, to run down a bolt until it is fully inserted into an object and its head abuts the object to which it is to be affixed.

The low speed/high torque mode is then used in the final operation of tightening the bolt in the object wherein higher torque and lower speed is required.

At high speed/low torque, the torque intensifying tool creates a reaction force which is transmitted to the handle, held by the operator, connected to the tool housing. The reaction force is relatively low and will normally be absorbed by the operator holding the handle.

Accordingly, a tool operator may normally be able to hold the tool handle provided that the handle is not subject a torque in excess of 0,69 kg.m (5 ft. lbs). This means that in the tool, in which the torque intensifying means may create a torque of up to 0,58 kg.m (50 in. lbs) at the high speed the operator holding the handle can stop the housing from rotation.

In the second mode of operation when the torque intensifying tool is operated with a high speed/low torque, the handle of the tool is typically switched from a perpendicular position relative to the housing to a position corresponding to the general direction of the housing, to abut against a stationary object and thereby to stop the housing from turning in the opposite direction to the active force of the tool.

In a high speed/low torque mode of operation the handle must be held in its perpendicular position relative to housing in a stationary manner by the operator, so as not to permit the housing to rotate at high speed. In such operation the inertia created by the weight of the arm and the speed could injure the operator if the operator's hands were to be in the way of handle rotation.

One improvement of the subject invention is to provide for at least two modes of operation, one high speed/low torque and one low speed/high torque, in which it is assured that while the tool is used at high speeds/low torque, operator injury as a result of twisting the arm or moving parts at high speed or hitting against the stationary object can be avoided.

Patent document GB 2 410 205 disposes an electric tool which can operate with at least two modes of operation, including one high speed/low torque mode and one low speed/high torque mode. In this tool in the high torque mode of operation, two handles provided with switches are gripped by the operator and held firmly, to ensure that the maximum output power of the electric tool is only made available if the operator is heeding a safe handling mode and grips the electric tool with both hands. In the mode of operation with high torque when the operator grips the electric tool he can be injured however by the tool operating at high torque.

### SUMMARY OF THE INVENTION

Accordingly, it is an object of the present invention to provide a safety torque intensifying tool, which is a further improvement of the existing torque intensifying tools.

More particularly, it is an object of the present invention to provide a safety torque intensifying tool, which is safer in operation than the existing torque intensifying tools.

In keeping with these objects and with others which will become apparent hereinafter, the present invention relates to a safety torque intensifying tool as per claim 1.

In the safety torque intensifying tool, when a tool operator does not act on the tool, the tool is held in the position in which it is in the above mentioned second mode of operation with the low speed and the high torque. Only when the tool operator acts on the switching means of the tool while the additional element acts as a handle, the tool is switched to the first mode of operation with the high speed and low torque, in which first mode of operation the additional element act as the handle. When the tool operator stops acting on the switching means of the tool, the tool is switched back to the second mode operation with the low speed and high torque.

The novel features which are considered as characteristic for the present invention are set forth in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF THE DRAWINGS

Figure 1 is a view showing a safety torque intensifying tool in accordance with the present invention in a first mode of operation with a high speed and a low torque;
Figure 2 is a view showing the safety torque intensifying tool in accordance with the present invention in a second mode of operation with a low speed and a high torque; and
Figure 3 is a view showing a part of an element of torque intensifying means of the inventive tool.

### DESCRIPTION OF THE PREFERRED EMBODIMENTS

A torque intensifying tool in accordance with the present invention has a housing which is identified with reference numeral 1. The housing 1 accommodates torque intensifying means identified as a whole with reference numeral 2 and a drive which is identified with reference numeral 3.

The torque intensifying means 2 include a plurality of gears and is connected at one end with the drive 3 and at the other end with a driving element 4. The torque intensifying means 2, as known in the art, can include a plurality of gear elements which are connected with one another and configured so that when the torque intensifying means is driven by the drive 3, it reduces a speed and increases a torque, so as to provide a corresponding output torque on the driving element 4.

The driving element 4 is engageable with a fastener, such as a nut, a bolt, etc. to turn the fastener, for example for tightening or loosening the fastener. The drive 3 can be formed for example as an electric motor, a hydraulic motor, etc. as known in the art.

The torque intensifying tool is further provided with a grip 5 which is also known per se in the art. The grip 5 is connected with the housing 1 and configured to be held by a tool operator.

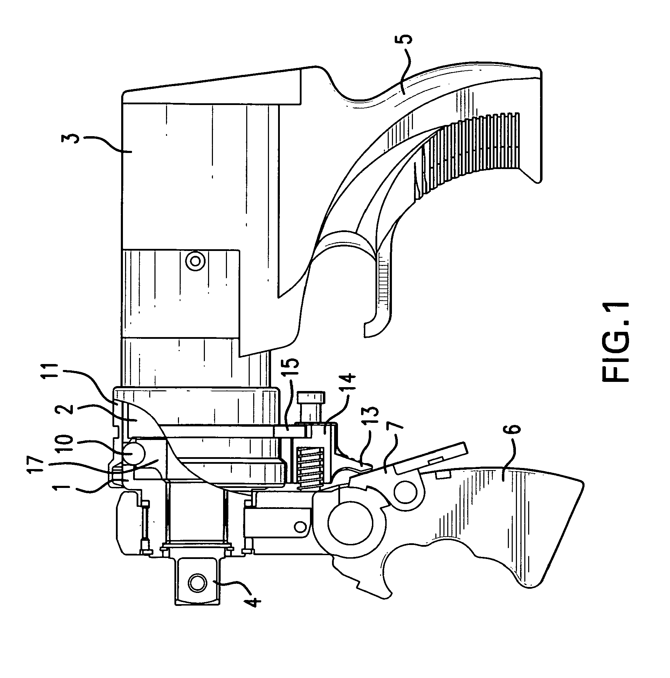

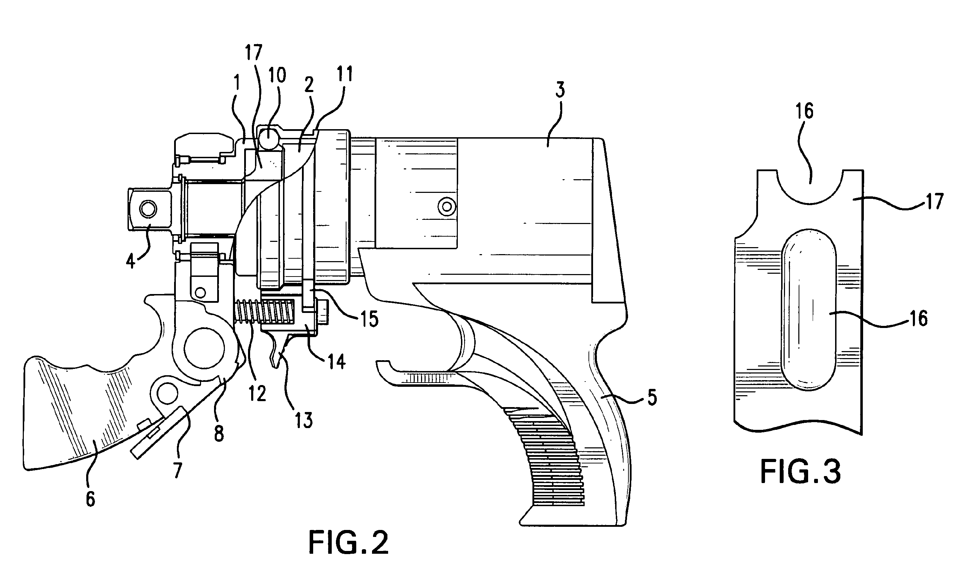

The torque intensifying tool of the present invention has an additional element 6 which performs, depending on the mode of the operation of the tool, two different functions. In the position of the element 6 shown in Figure 1 the element 6 extends substantially perpendicular to the housing 1 so as to operate as an additional handle for a better grip by the tool operator, which in this situation can hold both the grip 5 and the element 6 with his two hands. In the position shown in Figure 2 the element 6 is turned to extend substantially along the housing 6 and to abut against a neighboring stationary object so as to absorb a reaction force which is created when the torque intensifying tool is operated for turning the fastener with an action force.

In each position the element 6 can be temporarily fixed by a known fixing means. The fixing means can be formed, for example, as a pawl 7 which engages with its tooth 8 a corresponding side of a projection 9.

The torque intensifying tool in accordance with the present invention further has means for switching between two modes of operation, including a first mode in which the tool operates with a high speed and a low torque as shown in Figure 1, for example during initial turning of a fastener, such as a nut on a bolt, to reach an object for example two plates to be connected with one another by the fastener, and a second mode in which the torque intensifying tool operates with a low speed and high torque as shown in Figure 2 to tighten the fastener, for example the bolt, in the object.

In the first mode of operation the housing 1 and the torque intensifying means 2 are connected with one another for joint turning, and they jointly rotate the driving element 4, while in the second mode of operation the torque intensifying means 2 is disconnected from the housing 1 and the torque intensifying means 2 directly rotate the driving element 4 to turn a fastener.

The switching means in the torque intensifying tool can include for example a ball 10, which in the first mode of operation is located in an opening provided in the housing 1 and is also engaged in one of the recesses 16 provided in an element 17 of the torque intensifying means 2, for example its last stage, while in the second mode of operation the ball 10 is disengaged from the recess 16 of the element 17 of the torque intensifying means 2 and is located only in the opening of the housing 1.

For displacing the ball 10 between the above mentioned two positions, a ring-shaped shifting element 11 is provided, which is spring-loaded with a spring 12. When a tool operator does not activate the switching means the spring 12 displaces the shifting element 11 to the right in Figure 2 so that the shifting element 11 allows the ball 10 to disengage from the recess 16 of the element 17 of the torque intensifying means 2 and to be confined in the opening of the housing 1, and therefore that the housing 1 does not rotate together with the torque intensifying means 2. The tool operates in the second, low speed, high torque mode.

When a tool operator displaces the shifting element 11, for example by pressing a projection 13 of an actuating member 14 which via a bearing 15 engages in a groove of the shifting element 11, to the left in the drawings as shown in Figure 1, a part of the shifting element 11 that has a smaller diameter moves over the ball 10 and presses it into the recess 16 of the element 17 of the torque intensifying means 2, thus actually connecting the torque intensifying means 2 with the housing 1 for joint rotation under the action of the drive 3. The tool then operates in the first, high speed, low torque mode.

When the tool operator releases a pressure applied by him to the projection 13, the shifting element 11, under the action of the spring 12, is automatically displaced to the right, back to the position shown in Figure 2 in which the torque intensifying tool operates with a low speed and a high torque.

As can be seen from the drawings and described herein above when the torque intensifying tool is in the position shown in Figure 1 in which it operates with a high speed and a low torque, the element 6 extends substantially perpendicular to the housing and serves as an additional handle, while in the position shown in Figure 2 when the torque intensifying tool operates with a low speed and a high torque, the element 6 is turned to extend substantially along the housing and to abut against a neighboring object to absorb a reaction force generated during turning a fastener by the driving element 4, to be tightened and loosened by an active force.

It will be understood that each of the elements described above, or two or more together, may also find a useful application in other types of constructions differing from the type described above.

While the invention has been illustrated and described as embodied in a torque intensifying tool, it is not intended to be limited to the details shown, since various modifications and structural changes may be made without departing in any way from the scope of the claims defining the present invention.

Without further analysis, the foregoing will so fully describe the present invention that others can, be applying current knowledge, readily adapt it for various applications without omitting features that, from the standpoint of prior art, fairly constitute essential characteristics of the generic or specific aspects of this invention.

What is claimed as new and desired to be protected by Letters Patent is set forth in the appended claims.

## Claims

1. A safety torque intensifying tool, comprising a housing (1); torque intensifying means accommodated in said housing (1) and operative for providing at least two modes of operation including a first mode in which the torque intensifying tool operates with a high speed and a low torque and a second mode in which the torque intensifying tool operates with a low speed and a high torque; a grip (5) to be held by a tool operator; an additional element (6) performing the function of an additional handle for better gripping in said first mode in which the torque intensifying tool operates with the high speed and the low torque and also of a reaction arm to abut against a stationary object to stop said housing (1) from turning in said second mode when the torque intensifying tool operates with the low speed and the high torque; and switching means (10, 16, 11-15) for switching the torque intensifying tool between said first and second modes and **characterized in that** said switching means (10, 16, 11-15) is configured so that when the tool operator does not act on said switching means (10, 16, 11-15) the torque intensifying tool is in said second mode of operation with the low speed and the high torque and when said switching means (10, 16, 11-15) is acted on by the tool operator and the operator grips said additional element (6) as a handle, the torque intensifying tool is switched to said first mode of operation with the high speed and the low torque, until the tool operator stops acting on said switching means (10, 16, 11-15) and the torque intensifying tool is switched itself back to said second mode of operation.

2. A safety torque intensifying tool as defined in claim 1, wherein said housing (1) and said torque intensifying means (2) are configured so that in said first mode of operation said housing (1) and said torque intensifying means (2) are turned by a drive (1) jointly to turn a fastener, while in said second mode of operation only said torque intensifying means (2) is turned by the drive (1) to turn the fastener.

3. A safety torque intensifying tool as defined in claim 1, wherein said switching means (10, 16, 11-15) is configured so as alternatingly connect said torque intensifying means (2) with said housing (1) for joint turning by the drive (1) in said first mode of operation and for disconnecting said torque intensifying means (2) from said housing (1) in said second mode of operation for turning only said torque intensifying means (2) by the drive (1).

## Patentansprüche

1. Sicherheitsdrehmoment-Verstärkungswerkzeug, umfassend ein Gehäuse (1); eine Drehmoment-Verstärkungseinrichtung, die in dem Gehäuse (1) aufgenommen und dazu eingerichtet ist, wenigstens zwei Betriebsarten bereitzustellen, die eine erste Betriebsart, in der das Drehmoment-Verstärkungswerkzeug mit einer hohen Drehzahl und einem geringen Drehmoment arbeitet, und eine zweite Betriebsart umfassen, in der das Drehmoment-Verstärkungswerkzeug mit einer geringen Drehzahl und einem hohen Drehmoment arbeitet; einen Griff (5), der von einer Werkzeug-Bedienperson zu halten ist; ein Zusatzelement (6), das die Funktion eines zusätzlichen Griffes für besseres Greifen in der ersten Betriebsart, in der das Drehmoment-Verstärkungswerkzeug mit der hohen Drehzahl und dem geringen Drehmoment arbeitet, und zudem eines Reaktionsarmes hat, der mit einem unbeweglichen Gegenstand in Anlage gelangt, um zu verhindern, dass sich das Gehäuse (1) in der zweiten Betriebsart dreht, wenn das Drehmoment-Verstärkungswerkzeug mit der geringen Drehzahl und dem hohen Drehmoment arbeitet; und eine Umschalteinrichtung (10, 16, 11-15) zum Umschalten des Drehmoment-Verstärkungswerkzeuges zwischen der ersten und der zweiten Betriebsart, **dadurch gekennzeichnet, dass** die Umschalteinrichtung (10, 16, 11-15) derart eingerichtet ist, dass, wenn die Werkzeug-Bedienperson die Umschalteinrichtung (10, 16, 11-15) nicht bedient, sich das Drehmoment-Verstärkungswerkzeug in der zweiten Betriebsart mit der geringen Drehzahl und dem hohen Drehmoment befindet, und wenn die Umschalteinrichtung (10, 16, 11-15) von der Werkzeug-Bedienperson bedient wird und die Bedienperson das Zusatzelement (6) als Griff greift, das Drehmoment-Verstärkungswerkzeug in die erste Betriebsart mit der hohen Drehzahl und dem geringen Drehmoment umgeschaltet wird, bis die Bedienperson die Umschalteinrichtung (10, 16, 11-15) nicht mehr betätigt und sich das Drehmoment-Verstärkungswerkzeug selbst in die zweite Betriebsart zurückschaltet.

2. Sicherheitsdrehmoment-Verstärkungswerkzeug nach Anspruch 1, bei dem das Gehäuse (1) und die Drehmoment-Verstärkungseinrichtung (2) derart beschaffen sind, dass in der ersten Betriebsart das Gehäuse (1) und die Drehmoment-Verstärkungseinrichtung (2) von einem Antrieb (1) gemeinsam gedreht werden, um eine Befestigungseinrichtung zu drehen, während in der zweiten Betriebsart lediglich die Drehmoment-Verstärkungseinrichtung (2) von dem Antrieb (1) gedreht wird, um die Befestigungseinrichtung zu drehen.

3. Sicherheitsdrehmoment-Verstärkungswerkzeug nach Anspruch 1, bei dem die Umschalteinrichtung (10, 16, 11-15) dazu eingerichtet ist, die Drehmoment-Verstärkungseinrichtung (2) alternierend mit dem Gehäuse (1) für ein gemeinsames Drehen durch den Antrieb (1) in der ersten Betriebsart zu verbinden und die Drehmoment-Verstärkungseinrichtung (2) von dem Gehäuse (1) in der zweiten Betriebsart zu trennen, um lediglich die Drehmoment-Verstärkungseinrichtung (2) durch den Antrieb (1) zu drehen.

## Revendications

1. Outil de sécurité à amplification du couple, comprenant un logement (1) ; des moyens d'amplification du couple reçus dans ledit logement (1) et fonctionnels pour fournir au moins deux modes de fonctionnement comprenant un premier mode dans lequel l'outil à amplification du couple fonctionne avec une vitesse élevée et un couple faible, et un second mode dans lequel l'outil à amplification du couple fonctionne avec une vitesse faible et un couple élevé ; une poignée (5) destinée à être tenue par un opérateur de l'outil ; un élément supplémentaire (6) remplissant la fonction de manche supplémentaire pour une meilleure préhension dans ledit premier mode dans lequel l'outil à amplification du couple fonctionne avec la vitesse élevée et le couple faible, et également de bras de réaction pour venir en butée contre un objet fixe afin d'arrêter la rotation dudit logement (1) dans ledit second mode lorsque l'outil à amplification du couple fonctionne avec la vitesse faible et le couple élevé ; et des moyens de commutation (10, 16, 11-15) pour commuter l'outil à intensification du couple entre lesdits premier et second modes, et **caractérisé en ce que** lesdits moyens de commutation (10, 16, 11-15) sont configurés de telle sorte que, lorsque l'opérateur de l'outil n'agit pas sur lesdits moyens de commutation (10, 16, 11-15), l'outil à amplification du couple se trouve dans ledit second mode de fonctionnement avec la vitesse faible et le couple élevé, et lorsque lesdits moyens de commutation (10, 16, 11-15) sont actionnés par l'opérateur de l'outil et l'opérateur saisit ledit élément supplémentaire (6) en tant que manche, l'outil à amplification du couple soit commuté vers ledit premier mode de fonctionnement avec la vitesse élevée et le couple faible, jusqu'à ce que l'opérateur de l'outil cesse d'agir sur lesdits moyens de commutation (10, 16, 11-15) et que l'outil à amplification du couple soit commuté lui-même de nouveau vers ledit second mode de fonctionnement.

2. Outil de sécurité à amplification du couple selon la revendication 1, dans lequel ledit logement (1) et lesdits moyens d'amplification du couple (2) sont configurés de telle sorte que dans ledit premier mode de fonctionnement, ledit logement (1) et lesdits moyens d'amplification du couple (2) soient mis en rotation conjointement par un dispositif d'entraînement (1) afin de faire tourner un dispositif de fixation, tandis que dans ledit second mode de fonctionnement, seuls lesdits moyens d'amplification du couple (2) sont mis en rotation par le dispositif d'entraînement (1) afin de faire tourner le dispositif de fixation.

3. Outil de sécurité à amplification du couple selon la revendication 1, dans lequel lesdits moyens de commutation (10, 16, 11-15) sont configurés de façon à relier de manière alternée lesdits moyens d'amplification du couple (2) et ledit logement (1) pour une mise en rotation conjointe par le dispositif d'entraînement (1) dans ledit premier mode de fonctionnement, et pour une déconnexion desdits moyens d'amplification du couple (2) par rapport audit logement (1) dans ledit second mode de fonctionnement pour une mise en rotation desdits seuls moyens d'amplification du couple (2) par le dispositif d'entraînement (1).
